# EUROPÄISCHE PATENTSCHRIFT

(11) **EP 1 982 673 B1**
(45) Veröffentlichungstag und Bekanntmachung des Hinweises auf die Patenterteilung: **24.03.2010**
(21) Anmeldenummer: 08005570.0
(22) Anmeldetag: 26.03.2008
(51) Int. Cl.: A61C 8/00

(54) **Vorrichtung zum Einsetzen in eine Trägerstruktur**
Device for installation in a supporting structure
Dispositif d'installation dans une structure de support

(30) Priorität: 16.04.2007 DE 102007018198
(43) Veröffentlichungstag der Anmeldung: 22.10.2008
(73) Patentinhaber: Engesser, Urs, 8804 Au (CH)
(72) Erfinder: Engesser, Urs, 8804 Au (CH)
(74) Vertreter: Weiss, Peter

(56) Entgegenhaltungen:
- WO-A-02/062256
- US-A- 2 857 670
- US-A- 5 890 902

## Beschreibung

Die Erfindung betrifft eine Vorrichtung zum Einsetzen in eine Trägerstruktur, insbesondere in einen Kieferknochen, zum Festlegen eines Wirkelementes, insbesondere einer Zahnkrone, mit einem Implantat und einem Einsatz, wobei das Implantat eine Innenausnehmung aufweist, in die der Einsatz einsetzbar ist, wobei der Einsatz beim Einsetzen in die Innenausnehmung Retainer in die Trägerstruktur eindrückt, welche in einer Implantatwand eine Mehrzahl von Bohrungen vorgesehen sind, wobei die Innenausnehmung konisch ausgebildet ist.

### Stand der Technik

Bei der zementfreien oder zumindest zementarmen Verankerung von Implantaten in menschlichen Knochen ergeben sich häufig Schwierigkeiten mit der Fixierung während der ersten Wochen nach der Implantation bis durch An- und/oder Einwachsen von Gewebe eine ausreichende Fixierung erreicht ist. Diese Schwierigkeiten treten besonders bei platten- oder schalenartigen Implantaten auf, die bspw. lediglich beschädigte oder zerstörte Knorpelschichten der Gleitflächen in menschlichen Gelenken ganz oder teilweise ersetzen sollen. Denn bei diesen Implantaten müssen die für eine zementfreie Verankerung bestimmte Zapfen, die entweder eingeschlagen oder eingeschraubt werden, sowohl in der relativ dünnen und kompakten äusseren Knochenschicht, der Kortikalis, als auch in dem etwa eine zwanzigfach geringere Dichte aufweisenden spongiösen Gewebe fest verankert sein.

Die vorliegende Erfindung bezieht sich auf alle denkbaren Implantate, jedoch vorzugsweise auf Implantate für den Zahnersatz. Implantate als Ersatz für extrahierte Zähne sind in vielfältiger Form und Ausführung bekannt und auf dem Markt. Bspw. werden in der WO 83/00616, der DE-OS 26 28 485 oder DE-OS 23 08 962 Metallimplantate beschrieben, wobei ein Wurzelteil aus Metall eine obere Ausnehmung zum Verankern eines mit dem Ersatzzahn verbundenen oder zu verbindenden Zapfens aufweist. Aus der DE-PS 34 34 309 ist auch bekannt, das Implantat mit einer nach oben offenen Konusausnehmung zu versehen, in die ein Konus des Ersatzzahns mit Haftreibung eingreift. Dabei besteht die implantierbare Wurzel aus einem an sich bekannten porösen Metall, dessen Poren das Einwachsen von Knochengewebe mit anschliessender Knochenbildung zulassen.

Zur besseren Verankerung des Implantats ist auch bekannt, dass dieses auf dem Aussenumfang mit einer Verzahnung oder mit Umfangsrillen versehen wird. Bspw. wird dies in der FR-OS 22 04 392 gezeigt.

Daneben ist aus der CH 696 625 A5 ein zwei- oder mehrteiliges dentales Implantat, mit einem Implantatkörper zur Verankerung im Knochen und einem ein- oder mehrteiligen Implantataufbau zur Befestigung darauf bekannt, wobei eine zwischen dem Implantatkörper und dem Implantataufbau angeordnete Schicht sich bei der Montage des Implantataufbaus auf dem Implantatkörper so verformt, dass eine dichte, insbesondere im Aussenbereich, wo später der Kontakt zum Gewebe stattfindet, spaltfreie Verbindung entsteht.

Ausserdem ist aus der US 2,745,180 ein künstlicher Zahn bekannt, welcher aus einem Ankerbasiselement besteht, welches in einem Zahnbett Platz findet, wobei das Ankerbasiselement eine interne vertikale Bohrung und mehrere horizontale Bohrungen, eine Zahnkrone mit Sockelausnehmung, ein Schraubelement mit Kopf und tiefer liegendem Sockel aufweist, wobei der Sockel in der Bohrung positioniert wird und der Kopf in die Sockelausnehmung der Zahnkrone platziert wird, wobei sich in den vertikalen Bohrungen frei beweglich gelagerte Bolzen befinden, um das Ankerbasiselement im Zahnbett zu sichern.

Der Vollständigkeit halber ist noch die US 2,857,670 zu erwähnen. Dort ist ein künstlicher Zahn offenbart, welcher zur Implantation in einem natürlichen Zahnbett vorgesehen ist, wobei er aus einem Ankerbasiselement, einer Zahnkrone und nach aussen in die Zahnbettknochenstrukur tretenden Bolzen besteht, wobei diese dazu dienen das Ankerbasiselement einzuklemmen. Ausserdem befinden sich auf der Aussenseite des Ankerbasiselements Rippen, die dazu dienen, durch Wachstum der Zahnbettknochenstruktur das Ankerbasiselement zu sichern.

Des weiteren offenbart die WO 02/062256 A1 ein dreidimensionales Zahnimplantat mit einer künstlichen Wurzel. Dabei wird in ein Implantat, in dem sich Retrainer im Innenraum des Implantats befinden, ein Einsatz mit einem Aussengewinde in ein Innengewinde, das an der Innenseite des Implantats eingebracht ist, in das Implantat hingeschraubt. Dadurch werden die Retrainer aus entsprechend dafür vorgesehenen Öffnungen in die Knochensubstanz eingebracht.

### Aufgabe

Aufgabe der vorliegenden Erfindung ist es, eine bessere, schnellere und für den Patienten bequemere Methode zu finden, um ein Wirkelement mit einer entsprechenden Trägerstruktur zu verbinden.

### Lösung der Aufgabe

Zur Lösung der Aufgabe führt zum einen, dass die Innenausnehmung und der Einsatz konisch ausgebildet sind und der Einsatz von einer Axialbohrung durchzogen und durch die Axialbohrung eine Langschraube zum Festlegen des Wirkelementes bzw. des Einsatzes einsetzbar ist.

Die Innenausnehmung ist auf ihrer Oberfläche mit einer elastischen Schicht beschichtet.

Diese elastische Schicht hat den Vorteil, dass sie einem Stoss oder Druck, der auf den Einsatz bzw. auf das mit dem Einsatz verbundene Wirkelement einwirkt, in geringem Umfang kompensiert, wie dies auch bei dem Einsatz des ursprünglichen Wirkelementes in der Trägerstruktur gegeben ist. Bspw. bei einem Zahn in einem Kieferknochen ist dieses Nachgeben beim Kauen fühlbar. Trifft dagegen bspw. ein metallischer Einsatz direkt auf ein metallisches Implantat, so fehlt dieses natürliche Nachgebung, so dass sich der Biss selbst unnatürlich anfühlt. Ferner wird eine Druckkraft in Zugkraft umgewandelt und dadurch der Knochen aufgebaut und nicht abgebaut.

Aus welchem Material diese elastische Schicht besteht, ist von untergeordneter Bedeutung, es muss auf jeden Fall mundbeständig sein. Denkbar ist jedes Material, wenn es auch nur in geringem Umfang elastisch ist.

Ein weiteres Merkmal der Erfindung bezieht sich darauf, dass der Einsatz beim Einsetzen in die Innenausnehmung Retainer in die Trägerstruktur eindrückt. Das bedeutet, dass, im Gegensatz bspw. zu Rillen oder Gewindegängen auf dem Aussenumfang, die Alveole nicht in Mitleidenschaft gezogen wird, sondern ein glattes Einsetzen des Implantats stattfindet. Erst wenn das Implantat in der Alveole sitzt, werden durch den Einsatz die Retainer nach aussen gedrückt und dringen bspw. ein oder zwei Millimeter in die Knochenlamellen ein, so dass das Implantat sofort mechanisch verankert ist. Die Retainer bewirken, dass das Implantat ortsfest sitzt, was bedeutet, dass ggf. gleich die Krone aufgebracht und der Zahn benutzt werden kann.

Grundsätzlich ist es denkbar, dass die Retainer auch in ein vom Implantat separiertes Element, wie bspw. einem Zusatzring od.dgl. gelagert sind. Bevorzugt wird jedoch, dass sich die Retainer in Bohrungen in der Implantatwand befinden. Dabei sollen die Bohrungen schräg nach unten gerichtet sein. Dies verbessert zum einen die Halterung des Implantats im Knochen, zum anderen kann aber auch das Implantat leichter wieder aus der Alveole entnommen werden, sofern sich dies als notwendig erweist. Hierzu muss nur der Einsatz aus der Innenausnehmung des Implantats entfernt werden. Sind dann noch die Spitzen der Retainer pfeilspitzartig zugespitzt, weichen die Retainer bei einem Herausziehen des Implantates leicht in ihre Bohrung zurück.

Selbstverständlich kann es sich auch als ratsam erweisen, die Bohrung umgekehrt schräg anzustellen, so dass die Retainer als Widerhaken gegen ein Herausziehen wirken. Allerdings besteht dann eher die Gefahr, dass das Implantat weiter in die Bohrung eingleitet, sofern ein Druck auf das Implantat ausgeübt wird. Deshalb wird die erste Ausführungsform bevorzugt.

Bevorzugt sind Innenausnehmung und Einsatz konisch gleich ausgebildet. Die konisch sich verjüngende Ausgestaltung erleichtert jedoch das Herausdrücken der Retainer beim Einsetzen in die Innenausnehmung.

Das Wirkelement selbst wird bevorzugt durch eine Langschraube festgelegt, welche zum einen eine Wand des Wirkelementes durchdringt und nachfolgend durch eine Axialbohrung in den Einsatz fährt und in eine Gewindebohrung in der Spitze des Implantats eingeschraubt wird. Eine derartige Vorrichtung ist für jede Art des Implantierens denkbar. Vor allem soll sie aber der sog. Reimplantation von Zähnen dienen. Hierbei wird der ursprüngliche Zahn durch eine direkt von ihm angefertigte Kopie ersetzt. Dieser Vorgang geht folgendermassen vonstatten:

Der Zahnarzt zieht den zu ersetzenden Zahn und reinigt diesen sowie die Alveole. Sollte es notwendig sein, wird die Wurzel des natürlichen Zahns begradigt. Sodann wird sie mit einem Haftvermittler beschichtet. In die Alveole wird eine flüssige, gummiartige Abdruckmasse eingefüllt und dann die mit dem Haftvermittler beschichtete Wurzel in die mit dem Abdruckmaterial gefüllte Alveole eingedrückt. Der Patient beisst nun auf den Zahn, so dass die Bisshöhe zum Gegenzahn festgelegt wird.

Nach dem Aushärten des gummiartigen Abdruckmaterials wird der Zahn wieder aus der Alveole entfernt und ggfs. die Alveole mit einer Tamponage zwecks Offenhalten gefüllt.

Die gummibeschichtete Wurzel wird mit Galvanospray oder Silberpuder beschichtet, um eine Leitfähigkeit für ein Scanning oder eine Fotometrie herzustellen. Mittels dem Scanning oder der Fotometrie wird nun eine Kopie des abgetasteten Objekts, d.h. der Wurzel mit Zahnkrone hergestellt.

Nunmehr erfolgt ein Bearbeiten der Kopie, indem die Krone von der Wurzel getrennt wird. Die abgetrennte kopierte Wurzel wird wie das oben beschriebene Implantat behandelt, d.h. eine Innenausnehmung in ihr hergestellt, zusammen mit der Gewindebohrung und den seitlichen Bohrungen für die Retainer.

Die kopierte Wurzel wird nun reimplantiert, wobei sie bevorzugt, wie oben erwähnt, innen beschichtet ist. Danach wird der Einsatz in die Ausnehmung der kopierten Wurzel eingebracht und durch ihn zwecks Pilotierung die eingebrachten, nach innen überständigen Stifte in die Knochenlamellen eingetrieben, so dass Implantat sofort retentiv ist.

Zum Zwecke der besseren Justierung der Krone kann auf dem Einsatz noch ein Aufbau angeordnet sein, der eine gewisse Verdrehsicherung der Krone gegenüber der Wurzel (dem Implantat) gewirkt.

Die individualisierte Krone wird nun wieder auf das Implantat aufgebracht und mittels der Langschraube fixiert.

Findet keine Implantation sondern nur eine einfache Implantation statt, so werden die entsprechenden Implantate zusammen mit den Retainern und den Einsätzen In entsprechenden industriellen Fertigungsabläufen hergestellt und dem behandelnden Zahnarzt zur Verfügung gestellt.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: einen Längsschnitt durch ein erfindungsgemässes Implantat;
- Figur 2: einen Längsschnitt durch das erfindungsgemässe Implantat gemäss Figur 1 mit eingesetzten Retainern und einem Einsatz in Explosionsdarstellung;
- Figur 3: eine Draufsicht auf einen zusammengebauten Ersatzzahn.

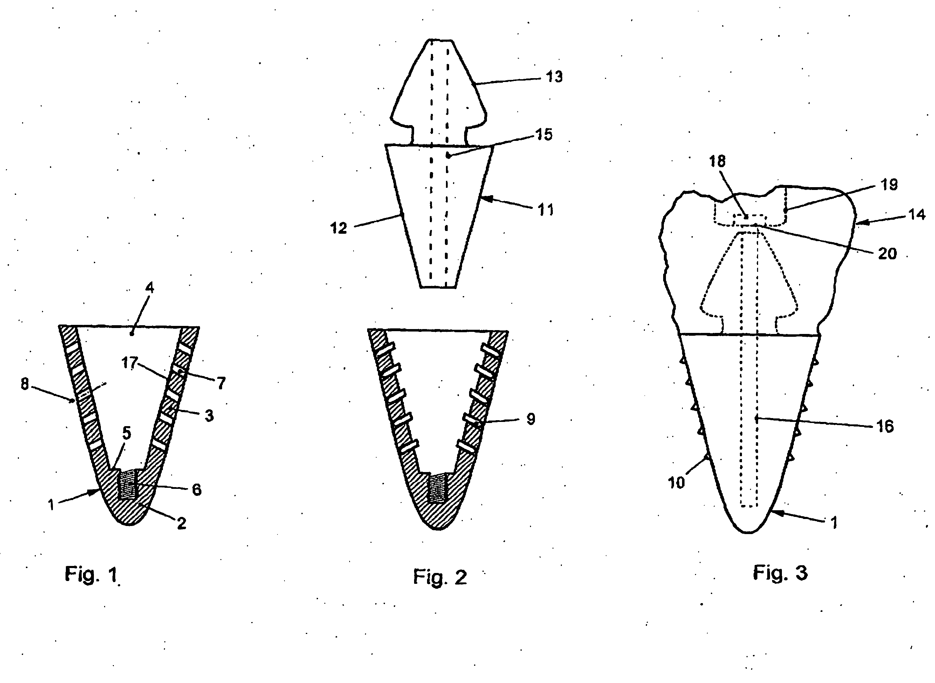

Gemäss Figur 1 ist ein erfindungsgemässes Implantat 1 einer Wurzel eines Zahnes nachgeformt. Dieses Implantat weist eine Spitze 2 auf, an die eine becherförmige Implantatwand 3 anschliesst. Diese becherförmige Implantatwand 3 umschliesst eine Innenausnehmung 4, die konisch ausgebildet ist und einen Boden 5 besitzt. Vom Boden 5 ausgehend ist in die Spitze 2 eine Gewindebohrung 6 eingeformt.

Erfindungsgemäss befinden sich in der Implantatwand 3 Bohrungen 7, die schräg nach unten ausgerichtet sind. Dies wird durch eine Achse 8 bei einer Bohrung 7 angedeutet.

Gemäss Figur 2 dienen die Bohrungen 7 der Aufnahme von Retainern 9. Die Retainer 9 sind stiftförmig ausgebildet und weisen eine Spitze 10 auf.

Mit dem Implantat 1 wirkt ein Einsatz 11 zusammen. Dieser Einsatz 11 besteht bei konventionellen Implantaten aus einem Konus 12 zum Einsetzen in die konische Innenausnehmung 4 und einem Aufbau 13 zum Festlegen einer in Figur 3 dargestellten Krone 14. Der Einsatz 11 wird von einer Axialbohrung 15 durchzogen, die der Aufnahme einer in Figur 3 gestrichelt dargestellten Langschraube 16 dient.

Die Funktionsweise der vorliegenden Erfindung ist folgende:

Nach dem Ziehen des Zahns wird das kopierte Implantat 1 in die im Kieferknochen verbleibende Alveole eingesetzt. Dabei befinden sich die Retainer 9 bereits in den Bohrungen 7 und sind dort gegen ein Herausfallen gesichert. Bspw. genügt es, die Aussenfläche des Implantats 1 mit einer salbenförmigen Beschichtung zu versehen. Diese Retainer 9 weisen eine Länge auf, die grösser als die Tiefe der Bohrung 7. Dadurch stehen die Retainer 9, wie in Figur 2 gezeigt, anfänglich in die lichte Weite der Innenausnehmung 4 vor.

Ferner soll erfindungsgemäss die Innenausnehmung mit einer elastischen Schicht 17 belegt sein.

Bevorzugt in einem sofort nachfolgenden Arbeitsgang wird der Einsatz 11 in die Innenausnehmung 4 eingesetzt und drückt beim Einsetzen die in die Innenausnehmung 4 vorstehenden Retainer 9 in den Bohrungen 7 nach aussen, so dass die Spitzen der Retainer 9 in die Knochenlamellen eingetrieben werden. Dies geschieht etwa 1 bis 2 mm tief, so dass die Retainer 9 sofort retentiv wirken. Das Vorstehen der Retainer 9 ist insbesondere in Figur 3 gezeigt.

Bei konventionellen Implantaten wird als nächstes die Krone 14, noch bevorzugt in einem ebenfalls gleich nachfolgenden Arbeitsgang, auf den Aufbau 13 aufgesetzt und die Langschraube 16 in die Axialbohrung 15 und die Gewindebohrung 6 eingeschraubt. Ein Schraubenkopf 18 sitzt dabei in einem vorbereiteten Loch 19 der Krone 14 und drückt einen Lochboden 20 gegen den Aufbau 13. Nach dem Festziehen der Langschraube 16 wird das Loch 19 verfüllt und der Patient kann sofort den Ersatzzahn benutzen.

**Bezugszeichenliste**

| | | | | | |
|---|---|---|---|---|---|
| 1 | Implantat | 34 | | 67 | |
| 2 | Spitze | 35 | | 68 | |
| 3 | Implantatwand | 36 | | 69 | |
| 4 | Innenausnehmung | 37 | | 70 | |
| 5 | Boden | 38 | | 71 | |
| 6 | Gewindebohrung | 39 | | 72 | |
| 7 | Bohrung | 40 | | 73 | |
| 8 | Achse | 41 | | 74 | |
| 9 | Retainer | 42 | | 75 | |
| 10 | Spitze | 43 | | 76 | |
| 11 | Einsatz | 44 | | 77 | |
| 12 | Konus | 45 | | 78 | |
| 13 | Aufbaut | 46 | | 79 | |
| 14 | Krone | 47 | | | |
| 15 | Axialbohrung | 48 | | | |
| 16 | Langschraube | 49 | | | |
| 17 | elastische Schicht | 50 | | | |
| 18 | Schraubenkopf | 51 | | | |
| 19 | Loch | 52 | | | |
| 20 | Lochboden | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Vorrichtung zum. Einsetzen in eine Trägerstruktur, insbesondere in einen Kleferknochen, zum Festlegen eines Wirkelementes, insbesondere einer Zahnkrone (14), mit einem Implantat (1) und einem Einsatz (11), wobei das Implantat (1) eine Innenausnehmung (4) aufweist, in die der Einsatz (11) einsetzbar ist, wobei der Einsatz (11) beim Einsetzen in die Innenausnehmung (4) Retainer (9) in die Trägerstruktur eindrückt, welche in einer Implantatwand (3) in einer Mehrzahl von Bohrungen (7) vorgesehen sind, und wobei die Innenausnehmung (4) konisch ausgebildet ist,
**dadurch gekennzeichnet,**
**dass** der Einsatz (11) konisch ausgebildet ist und der Einsatz (11) von einer Axialbohrung (15) durchzogen und durch die Axialbohrung (15) eine Langschraube (16) zum Festlegen des Wirkelementes (14) bzw. des Einsatzes (11) einsetzbar ist.

2. Vorrichtung nach Anspruch 1, **dadurch gekennzeichnet, dass** die Langschraube (16) in eine Gewindebohrung (6) eingreift, die an einen Boden (5) der Innenausnehmung (4) anschliesst.

3. Vorrichtung nach Anspruch 1 oder 2, **dadurch gekennzeichnet, dass** der Einsatz (11) einen Aufbau (13) aufweist, an dem das Wirkelement (14) festlegbar ist.

4. Vorrichtung nach wenigstens einem der Ansprüche 1 bis 3, **dadurch gekennzeichnet, dass** eine Achse (B) jeder Bohrung (7) schräg nach unten gerichtet ist.

5. Vorrichtung nach wenigstens einem der Ansprüche: 1 bis 4, **dadurch gekennzeichnet, dass** zwischen der Innenausnehmung (4) und dem Einsatz (11) eine elastische Schicht (17) angeordnet ist.

## Claims

1. A device for insertion into a supporting structure, in particular into a jawbone, to secure an operative element in position, in particular a tooth crown (14), having an implant (1) and an insert (11), wherein the implant (1) has an inner recess (4) into which the insert (11) can be inserted, wherein upon insertion into the inner recess (4), the insert (11) pushes retainers (9) into the supporting structure, which retainers are provided in an implant wall (3) in a plurality of bores (7), and wherein the inner recess (4) is tapered, **characterised in that** the insert (11) is tapered and an axial bore (15) passes through the insert (11) and a long screw (16) to secure the operative element (14) and the insert (11) is insertable through the axial bore (15).

2. A device according to claim 1, **characterised in that** the long screw (16) engages a tapped bore (6) connected to a base (5) of the inner recess (4).

3. A device according to claim 1 or 2, **characterised in that** the insert (11) has a superstructure (13) to which the operative element (14) can be secured.

4. A device according to at least one of claims 1 to 3, **characterised in that** an axis (8) of each bore (7) is directed obliquely downwards.

5. A device according to at least one of claims 1 to 4, **characterised in that** a resilient layer (17) is arranged between the inner recess (4) and the insert (11).

## Revendications

1. Dispositif d'installation dans une structure de support, en particulier dans un os de la mâchoire, pour la fixation d'un élément actif, en particulier d'une couronne dentaire (14), avec un implant (1) et un insert (11), l'implant (1) présentant un creux intérieur (4) dans lequel peut être placé l'insert (11), l'insert (11) enfonçant, lors du placement dans le creux intérieur (4), des dispositifs de retenue (9) dans la structure de support, lesquels sont prévus dans une paroi d'implant (3), dans une pluralité d'alésages (7), et le creux intérieur (4) étant réalisé conique,
**caractérisé par le fait**
**que** l'insert (11) est réalisé conique et que l'insert (11) est traversé par un alésage axial (15) et que par l'alésage axial (15) peut être placée une vis longitudinale (16) pour la fixation de l'élément actif (14) ou de l'insert (11).

2. Dispositif selon la revendication 1, **caractérisé par le fait que** la vis longitudinale (16) s'engage dans un alésage taraudé (6) qui est rattaché à un fond (5) du creux intérieur (4).

3. Dispositif selon la revendication 1 ou 2, **caractérisé par le fait que** l'insert (11) présente une superstructure (13) à laquelle peut être fixé l'élément actif (14).

4. Dispositif selon au moins l'une des revendications 1 à 3, **caractérisé par le fait qu'**un axe (8) de chaque alésage (7) est orienté obliquement vers le bas.

5. Dispositif selon au moins l'une des revendications 1 à 4, **caractérisé par le fait qu'**entre le creux intérieur (4) et l'insert (11) est disposée une couche élastique (17).
